# EUROPÄISCHE PATENTSCHRIFT

(11) **EP 3 423 243 B1**
(45) Veröffentlichungstag und Bekanntmachung des Hinweises auf die Patenterteilung: **12.08.2026**
(21) Anmeldenummer: 17708460.5
(22) Anmeldetag: 28.02.2017
(51) Int. Cl.: B25J 19/00

(54) **INDUSTRIEROBOTER MIT EINER SCHUTZMANSCHETTE**
INDUSTRIAL ROBOT WITH A PROTECTIVE SLEEVE
ROBOT INDUSTRIEL MUNI D'UN MANCHON DE PROTECTION

(30) Priorität: 01.03.2016 DE 102016203361
(43) Veröffentlichungstag der Anmeldung: 09.01.2019
(73) Patentinhaber: KUKA Deutschland GmbH, 86165 Augsburg (DE)
(72) Erfinder: HEITZ, Jürgen, 86707 Westendorf (DE); NASRADINI, Melina, 86163 Augsburg (DE); KARLINGER, Stefan, 86199 Augsburg (DE); KURMYSHKIN, Vladimir, 86368 Gersthofen (DE); ROHÉ, Frank, 86368 Gersthofen (DE); LORENZ, Marco, 01896 Pulsnitz (DE); WIEMERS, Christian, 86316 Friedberg (DE)
(74) Vertreter: Böss, Dieter Alexander
(86) Internationale Anmeldenummer: PCT/EP2017/054649
(87) Internationale Veröffentlichungsnummer: WO 2017/148948

(56) Entgegenhaltungen:
- CN-A- 103 802 135
- DE-A1- 10 231 722
- US-A- 5 777 267
- US-A1- 2015 068 347

## Beschreibung

Die Erfindung betrifft einen Industrieroboter aufweisend einen Roboterarm mit mehreren Gliedern, die mittels mehrerer Gelenke verbunden und durch die mehreren Gelenke gegeneinander verstellbar gelagert sind, sowie aufweisend eine Versorgungsleitung, die entlang zumindest zweier der mehreren Glieder des Roboterarms über wenigstens eines der mehreren Gelenke hinweg geführt und außerhalb des Roboterarms angeordnet ist.

Aus der EP 0 979 709 B1 ist ein Verschleißring, insbesondere zum Schutz eines Kabelführungsschlauches an einem Roboter bekannt. Derartige Verschleißringe sind an kritischen Stellen eines Schutzschlauches für Kabel an einem Roboter angeordnet, um eine Beschädigung des Schutzschlauches selbst durch Scheuern an solchen kritischen Stellen zu verhindern, wie beispielsweise dort, wo der Schutzschlauch bewegte Roboterteile, wie eine Schwinge, einen Arm oder eine Hand des Roboters berührt.

Die DE 102 31 722 A1 beschreibt eine Vorrichtung zum Abdecken kantiger Bereiche einer Roboterhand, die an mindestens einer Trennstelle eine flexible Manschette aufweist.

Die US 5,777,267 beschreibt einen Roboterarm, der seinem Flansch unmittelbar vorgelagert zwei voneinander beabstandete Ringscheiben aufweist, zwischen denen eine Spiralleitung geführt ist.

Die US 2015/0068347 A1 beschreibt einen Roboterarm, der im Bereich eines seiner Drehgelenke einen umlaufenden Bund aufweist, in dessen Innenraum ein ringförmiger Hohlraum gebildet wird, in dem sich eine Leitung befindet. Innerhalb dieses inneren Hohlraums kann sich die Leitung gegen einen inneren Bund an einem Reduktionsgetriebe abstützten.

Aufgabe der Erfindung ist es, einen Industrieroboter mit einer außerhalb des Roboterarms entlang geführten Versorgungsleitung zu schaffen, bei dem ein Verschleiß zwischen Roboterarm und Versorgungsleitung reduziert ist.

Die Aufgabe der Erfindung wird gelöst durch eine Industrieroboter aufweisend einen Roboterarm mit mehreren Gliedern, die mittels mehrerer Gelenke verbunden und durch die mehreren Gelenke gegeneinander verstellbar gelagert sind, sowie aufweisend eine Versorgungsleitung, die entlang zumindest zweier der mehreren Glieder des Roboterarms über wenigstens eines der mehreren Gelenke hinweg geführt und außerhalb des Roboterarms angeordnet ist, und aufweisend eine Schutzmanschette, die an einem der Glieder angeordnet ist, und zwar zumindest eines der Glieder über dessen Umfang hinweg zumindest teilweise oder vollständig umgebend, wobei die Schutzmanschette eine äußere Mantelwand aufweist, die ausgebildet ist, eine Lagerungsfläche für einen Abschnitt der Versorgungsleitung zu bilden, wobei die Schutzmanschette mittels wenigstens eines Drehlagers an einem der Glieder des Roboterarms drehbar gelagert ist und zwar derart, dass die Schutzmanschette um das Glied herum rotieren kann, wobei sich ein Abschnitt der Versorgungsleitung gleitfrei an die Schutzmanschette anlegen kann, so dass zwischen der Versorgungsleitung und der Lagerungsfläche keine Relativbewegung stattfindet.

Ein Industrieroboter weist im Allgemeinen einen Roboterarm und eine programmierbare Robotersteuerung (Steuervorrichtung) auf, die während des Betriebs die Bewegungsabläufe des Industrieroboters steuert oder regelt, indem ein oder mehrere insbesondere automatisch verstellbare Gelenke (Roboterachsen) durch insbesondere elektrische Antriebe oder Motoren bewegt werden, wobei die Robotersteuerung die Antriebe gemäß eines Roboterprogramms automatisch oder in einem Handfahrbetrieb steuern oder regeln kann. Die Robotersteuerung dient also dazu, die Gelenke des Roboterarms durch Ansteuern von Antrieben des Roboterarms zu verstellen, wodurch die Glieder des Roboterarms bewegt werden. Jeweils zwei benachbarte Glieder des Roboterarms können dabei durch ein einzelnes Gelenk gegeneinander verstellbar verbunden sein, welches die jeweilige Achse darstellt, die von einem zugeordneten Antrieb bewegt wird.

Roboterarme können unter anderem ein Gestell und ein relativ zum Gestell mittels eines Gelenks drehbar gelagertes Karussell umfassen, an dem eine Schwinge mittels eines anderen Gelenks schwenkbar gelagert ist. An der Schwinge kann dabei ihrerseits ein Armausleger mittels eines weiteren Gelenks schwenkbar gelagert sein. Der Armausleger trägt dabei eine Roboterhand, wobei insoweit der Armausleger und/oder die Roboterhand mehrere weitere Gelenke aufweisen können. Eines, mehrere oder alle Gelenke des Roboterarms können als Drehgelenke ausgebildet sein.

Der mehrere über Gelenke verbundene Glieder aufweisende Roboterarm kann als ein Knickarmroboter mit mehreren seriell nacheinander angeordneten Gliedern und Gelenken konfiguriert sein, insbesondere kann der Roboterarm als ein Sechsachs-Knickarmroboter ausgebildet sein. Eines, mehrere oder alle Gelenke des Knickarmroboters können als Drehgelenke ausgebildet sein.

Unter einer Versorgungsleitung wird insbesondere eine Energieleitung und/oder eine Energiezuführung verstanden, die Leitungen, wie beispielsweise elektrische Leitungen, Kalt- und/oder Warmwasserleitungen, Fluid- und/oder Druckleitungen zu Werkzeugen, die an dem Roboter angeflanscht sind, aufweisen kann. Die Versorgungsleitung, insbesondere die Energieleitung und/oder die Energiezuführung kann in Einzelsträngen oder in Kabelbündel zusammengefasst und insbesondere mit einem oder mehreren flexiblen Schutzschläuchen, wie beispielsweise Wellschläuchen ummantelt sein.

Die Schutzmanschette ist ein von den Strukturbauteilen der Glieder des Roboterarms separates Anbauteil. Die Strukturbauteile des Roboterarms sind ausgebildet sämtliche Kräfte und Momente zwischen einem distalen Endglied des Roboterarms, beispielsweise einem Werkzeugflansch, und einem proximalen Grundglied des Roboterarms, beispielsweise einem Grundgestell, zu übertragen, die erforderlich sind, um ein am Roboterarm angeflanschtes Werkzeug, einen Greifer und/oder ein Bauteil halten und im Raum bewegen zu können, wobei auch die Gewichtskräfte und -momente der Glieder des Roboterarms selbst durch die Strukturbauteile abgestützt werden. Die Strukturbauteile können Gehäusebauteile sein. Die Strukturbauteile können insbesondere hohle Gehäusebauteile sein, die beispielsweise als Schweißkonstruktionen oder als Gussbauteile, insbesondere aus Stahl oder Aluminium ausgebildet sein können.

Indem die Schutzmanschette an einem der Glieder angeordnet ist, und zwar zumindest eines der Glieder über dessen Umfang hinweg zumindest teilweise oder vollständig umgebend, wird das betreffende Glied davor geschützt von der Versorgungsleitung berührt zu werden. Damit ist das betreffende Glied vollständig vor Verschleiß aufgrund eines Anschlagens und/oder Aufreibens durch die sich bewegende Versorgungsleitung geschützt. Je nach den Bewegungsmöglichkeiten des Roboterarms und je nach Ausbildung und Anordnung der Versorgungsleitung ist es dabei nicht stets zwingend erforderlich, dass das betreffende Glied vollumfänglich durch die Schutzmanschette abgeschirmt wird. In gewissen Fällen kann es schon hinreichend sein, das betreffende Glied nur über einen Teilumfang des Glieds mit der Schutzmanschette zu umgeben, beispielsweise dann, wenn die Versorgungsleitung ausschließlich an einer bestimmten Seite des Glieds an dieses anschlagen kann.

Indem die Schutzmanschette eine äußere Mantelwand aufweist, die ausgebildet ist, eine Lagerungsfläche für einen Abschnitt der Versorgungsleitung zu bilden, kann sich der betreffende Abschnitt der Versorgungsleitung insbesondere gleitreibungsarm oder sogar gleitreibungsfrei an die Lagerungsfläche der Schutzmanschette anlegen, wodurch dieser Abschnitt der Versorgungsleitung vor Verschleiß aufgrund eines Anschlagens und/oder Aufreibens der sich bewegende Versorgungsleitung geschützt ist.

Die Schutzmanschette kann insoweit eine äußere Mantelwand aufweisen, die ausgebildet ist, eine Anlagefläche für einen Abschnitt der Versorgungsleitung zu bilden, derart dass der Abschnitt der Versorgungsleitung in Abhängigkeit eines Verstellens der Gelenke sich an die Anlagefläche anlegt oder von der Anlagefläche abhebt, ohne dass es zu nennenswerten Schleifbewegungen zwischen dem Abschnitt der Versorgungsleitung und der Schutzmanschette kommt. Beispielsweise kann die Schutzmanschette an dem betreffenden Glied beweglich, insbesondere um das Glied herum drehbar gelagert sein, wodurch die Anlagefläche der Schutzmanschette sich mit der Bewegung des Abschnitts der Versorgungsleitung mitbewegen kann.

Insbesondere kann die Mantelwand starr ausgebildet sein, beispielsweise aus einem Metallblech. Bevorzugt kann die zur Versorgungsleitung gerichtete Oberfläche der Mantelwand poliert sein, um den Gleitwiderstand gering zu halten. Alternativ kann die Oberfläche der Mantelwand eine Beschichtung oder Deckschicht umfassen, die aus einem verformbaren bzw. weicheren Material ausgebildet ist als Material der restlichen Mantelwand und/oder der Versorgungsleitungsoberfläche, die mit der Schutzmanschette kontaktiert. Beispielsweise kann eine Beschichtung oder Deckschicht aus einem Elastomer vorgesehen sein.

Anders ausgedrückt bildet der Roboterarm mit der Schutzmanschette eine Kombination von einem Führungspunkt und einer speziellen Art der Aufwicklung der Energiezuführung. D.h. der Versorgungsleitung auf eine Schutzkontur, d.h. der Schutzmanschette insbesondere um die Roboterhand. Der Führungspunkt kann den Verlauf der Energizuführung genauer definieren und eine Berührung des Schlauchpaketes mit dem Roboterarm inkl. Roboterhand minimieren. Die Energiezuführung ist durch eine Klemmung mit der betreffenden Roboterachse verbunden. Durch die Drehung beispielsweise der Roboterhandachse wird die Energiezuführung kontrolliert auf diese Schutzkontur aufgewickelt.

Indem die Reibung zwischen dem Schlauch, d.h. der Versorgungsleitung und der Robotermechanik, d.h. dem Roboterarm minimiert wird, kann eine Abnutzung reduziert oder sogar ganz vermieden werden. Dabei ergibt sich die Randbedingung, dass die Bewegungsfreiheit des Roboterarms nicht eingeschränkt werden soll. So ist vorgesehen, den starren Anteil des Roboterarms, welcher die Achse, d.h. das Gelenk zwischen dem Vorderarm und dem Grundarm enthält, durch einen sich drehend mitbewegenden Zylinderkörper, der Schutzmanschette, zu ersetzen. Dieses Gelenk kann dabei innerhalb eines Zylinders liegen und dadurch geschützt sein. Durch das Mitdrehen des Zylinders, d.h. der Schutzmanschette entsprechend der Drehung des Gelenks, wickelt sich der Energiezuführungsschlauch, d.h. die Versorgungsleitung auf den Zylinder bzw. die Schutzmanschette auf. Die Relativbewegung zwischen dem Schlauch und dem Zylinder in tangentialer Richtung wird somit minimiert, wodurch auch ein Abrieb vermindert wird. Wird der Zylinder über die komplette Armlänge ausgebildet, sind in diesem Bereich keine feststehenden Teile mehr vorhanden, an denen sich der Schlauch abschleifen könnte. Die Bewegungsfreiheit des Roboterarms wird nicht eingeschränkt. Zudem kann der Schlauch eng an der Armkontur geführt werden, was Vorteile im Betrieb ergibt.

Die Schutzmanschette, insbesondere die Lagerungsfläche der Schutzmanschette kann in einer ersten allgemeinen Ausführungsform zumindest im Wesentlichen zylindrisch ausgebildet und mit ihrer Zylinderachse in Längserstreckung des Gliedes ausgerichtet an einem der Glieder angeordnet sein.

Die Lagerungsfläche ist dabei ganz allgemein diejenige äußere Mantelfläche der Schutzmanschette, an welche sich die Versorgungsleitung anlegt. Die Lagerungsfläche kann beispielsweise eine Außenschicht aufweisen, welche einen Verschleiß der Versorgungsleitung zusätzlich verringern oder sogar ganz vermeiden kann. Die Außenschicht kann eine Auflage sein oder als eine Beschichtung auf die Lagerungsfläche aufgetragen sein. Die Schutzmanschette kann beispielsweise von einem dünnwandigen Blech gebildet werden, welches das betreffende Glied des Roboterarms umfängt. Die Schutzmanschette kann einteilig oder mehrteilig ausgebildet sein. Im Falle einer mehrteiligen Ausbildung der Schutzmanschette kann diese beispielsweise im Wesentlichen durch zwei Halbschalen gebildet werden, welche das Glied des Roboterarms von gegenüberliegenden Seiten einschließen. Zwischen der Schutzmanschette und dem Glied kann ein ringförmiger Spaltraum ausgebildet sein. Mit anderen Worten ist die Schutzmanschette in einem Abstand zum Glied angeordnet.

Ganz allgemein können auch mehrere Schutzmanschetten an mehreren Stellen des Roboterarms, **d.h.** an mehreren Gliedern angeordnet sein.

Indem die Schutzmanschette zumindest im Wesentlichen zylindrisch ausgebildet und mit ihrer Zylinderachse in Längserstreckung des Gliedes ausgerichtet an einem der Glieder angeordnet ist, wird das zugeordnete Glied des Roboterarms vollumfänglich, insbesondere ringartig von der Schutzmanschette eingeschlossen. Die Schutzmanschette kann sich in einer axialen Längserstreckung des Gliedes nahezu vollständig oder vollständig über die gesamte Länge des Glieds erstrecken. Die Schutzmanschette muss sich jedoch nicht über die gesamte Länge des Glieds erstrecken. Vielmehr kann sich die Schutzmanschette lediglich über einen Teilabschnitt der Länge des Glieds erstrecken. Die Schutzmanschette, die sich nur über einen Teilabschnitt der Länge des Glieds erstreckt, kann insbesondere in der Nähe eines sich an das Glied anschließenden Gelenks angeordnet sein. Die Schutzmanschette kann im Querschnitt kreisförmig ausgebildet sein. Alternativ kann die Schutzmanschette im Querschnitt beispielsweise auch elliptisch oder oval ausgebildet sein.

Die Lagerungsfläche kann dabei in ihrem Durchmesser sich erweiternd oder sich verjüngend ausgebildet sein. Die Schutzmanschette kann insoweit beispielsweise eine kegelstumpfförmige oder parabolische oder hyperbolische Mantelwand aufweisen. Dadurch können unterschiedliche Aufwickelradien für die Versorgungsleitung erzeugt werden. Indem die Lagerungsfläche in ihrem Durchmesser sich einerseits sowohl erweiternd als auch andererseits sich verjüngend ausgebildet sein kann, kann beispielsweise eine rinnenförmige oder wannenförmige Gestalt realisiert werden, welche über den Umfang des Glieds umläuft, wodurch die Versorgungsleitung trommelartig seitlich geführt sein kann, so dass die Versorgungsleitung daran gehindert ist, in axialer Richtung von der Lagerungsfläche der Schutzmanschette abzurutschen.

Die Lagerungsfläche kann demgemäß in einer zweiten allgemeinen Ausführungsform zum Aufwickeln und/oder Abwickeln des Abschnitts der Versorgungsleitung in einer im Wesentlichen um den Umfang des Gliedes herumführenden Richtung ausgebildet sein. Die Schutzmanschette, insbesondere die Lagerungsfläche kann dabei eine Führungsrille für den sich anlegenden Abschnitt der Versorgungsleitung bilden. Eine solche Führungsrille kann ohne Steigung oder gewindeartig mit einer Steigung versehen sein. Ist die Schutzmanschette, insbesondere die Lagerungsfläche mit einer Führungsrille mit Steigung versehen, so kann auch ein Abschnitt der Versorgungsleitung über einen Winkel von mehr als 360 Grad auf die Schutzmanschette aufgewickelt und/oder von dieser abgewickelt werden.

Die Schutzmanschette ist erfindungsgemäß mittels wenigstens eines Drehlagers an einem der Glieder des Roboterarms drehbar gelagert. Eine drehbare Lagerung erfolgt dabei um eine Drehachse die parallel zur Längserstreckung des Glieds, insbesondere koaxial zum Glied ausgerichtet ist. Die Schutzmanschette rotiert dabei insoweit um das Glied herum. Das Drehlager kann beispielsweise von ein oder mehreren Wälzlagern gebildet werden, über welche die Schutzmanschette an dem Glied drehbar gelagert ist. Indem die Schutzmanschette mittels wenigstens eines Drehlagers an einem der Glieder des Roboterarms drehbar gelagert ist, kann sich ein Abschnitt der Versorgungsleitung gleitfrei an die Schutzmanschette, insbesondere an die Lagerungsfläche anlegen, so dass zwischen der Versorgungsleitung und der Lagerungsfläche keine Relativbewegung stattfindet und dadurch der Verschleiß sowohl der Versorgungsleitung als auch der Lagerungsfläche zumindest vermindert oder sogar ganz beseitigt ist. Wird die Versorgungsleitung über ein Glied des Roboterarms hinweg gezogen, so wälzt die Versorgungsleitung auf der drehbar gelagerten Schutzmanschette hinweg, ohne das Glied zu berühren und ohne auf der Lagerungsfläche entlang zu schleifen.

Die Schutzmanschette kann in einer vierten allgemeinen Ausführungsform einen Halter aufweisen, an dem ein Abschnitt der Versorgungsleitung befestigt ist. Ein solcher Halter kann vorgesehen sein, wenn die Schutzmanschette starr an dem Glied des Roboterarms befestigt ist. Ein solcher Halter kann aber auch vorgesehen sein, wenn die Schutzmanschette mittels wenigstens eines Drehlagers an einem der Glieder des Roboterarms drehbar gelagert ist.

In beiden Fällen schafft der Halter einen eindeutigen, nicht veränderlichen Bezug des gehalterten Abschnitts der Versorgungsleitung bezüglich der Schutzmanschette.

Da die Schutzmanschette mittels wenigstens eines Drehlagers an einem der Glieder des Roboterarms drehbar gelagert ist, kann sich ein frei beweglicher Abschnitt der Versorgungsleitung auf die Schutzmanschette aufwickeln, wenn sich die Schutzmanschette dreht, beispielsweise durch eine Zugbewegung auf die Versorgungsleitung. Indem die Schutzmanschette einen Halter aufweist, an dem ein Abschnitt der Versorgungsleitung befestigt ist, kann die Versorgungsleitung ihre Verbindung zur Schutzmanschette nicht vollständig verlieren. Indem ein Abschnitt der Versorgungsleitung durch den Halter an der Schutzmanschette festgelegt ist, kann ein Aufwickeln und ein Abwickeln der Versorgungsleitung sicherer und verschließfreier stattfinden.

Mittels einer Schlauchführungsschelle kann die Versorgungsleitung derart geführt werden, dass sich ein Abschnitt der Versorgungsleitung zuverlässig auf eine Lagerungsfläche der Schutzmanschette auflegen kann ohne abzurutschen. Die Schlauchführungsschelle kann an einem Schenkel eines Gliedes, insbesondere des Handglieds 8 gelagert sein. Die Schlauchführungsschelle kann einen Befestigungshalter, eine Schelle und eine doppelte Führungstrompete umfassen. Mittels der doppelten Führungstrompete ist die Versorgungsleitung seitlich geführt und kann dabei in ihrer Längserstreckung verschoben werden, **d.h.** in beide Richtungen durch die Schelle hindurch gezogen werden, wobei eine geringfügige Winkeländerung der Lage der Versorgungsleitung möglich ist. Die Schelle befestigt die Führungstrompete an dem Befestigungshalter. Der Befestigungshalter kann die Schlauchführungsschelle entweder starr an dem Glied, insbesondere an dem Handglied befestigen oder die Schlauchführungsschelle drehbar oder schwenkbar an dem Glied, insbesondere an dem Handglied lagern.

In einer ersten speziellen Ausführungsvariante kann von den mehreren Gliedern des Roboterarms ein erstes Glied ein Grundgestell sein, ein zweites Glied ein Karussell sein, ein drittes Glied eine Schwinge sein, ein viertes Glied ein Grundarm sein, ein fünftes Glied ein Vorderarm sein, ein sechstes Glied ein Handglied sein und ein siebtes Glied ein Flanschglied sein, wobei zur Bildung einer seriellen Armstruktur des Roboterarms jeweils zwei benachbarte Glieder durch jeweils eines der Gelenke gegeneinander verstellbar verbunden sind und die Schutzmanschette an dem Grundarm angeordnet ist.

Wenn die Schutzmanschette an dem Grundarm angeordnet ist, kann eine von der Schwinge oder von einer der Schwinge zuweisenden Anschlussstelle des Grundarms ausgehende oder herangeführte Versorgungsleitung sich an der Schutzmanschette anlegen, wenn sich der Vorderarm oder das Flanschglied des Roboterarms dreht. Ein Teilabschnitt der Versorgungsleitung kann in einem Leitungsspeicher vorgehalten sein, derart, dass der Teilabschnitt aus dem Leitungsspeicher herausgezogen und wieder hineingeschoben oder hineingezogen werden kann, um die am Roboterarm frei verfügbare Länge der Versorgungsleitung verlängern oder wieder verkürzen zu können. Der Leitungsspeicher kann insbesondere an dem Grundarm angeordnet sein. Ein solcher Leitungsspeicher wir auch als Energiezuführungsvorrichtung für Industrieroboter bezeichnet und ist beispielsweise in der EP 2 244 867 B1 näher beschrieben.

Wenn beispielsweise der Vorderarm dreht, dann wird die Versorgungsleitung aus dem Leitungsspeicher herausgezogen und die Versorgungsleitung wickelt sich indirekt um den Grundarm, d.h. unmittelbar um die Schutzmanschette, wobei die Versorgungsleitung dabei über die Lagerungsfläche der Schutzmanschette gezogen wird und insoweit über die Schutzmanschette schleift.

Die Schutzmanschette kann in der ersten speziellen Ausführungsvariante an dem Grundarm drehbar gelagert sein. Indem die Schutzmanschette an dem Grundarm drehbar gelagert ist, kann ein Schleifen der Versorgungsleitung auf der Lagerungsfläche der Schutzmanschette verhindert werden. So kann einem Reibungsverschleiß vorgebeugt werden und Standfestigkeit von Versorgungsleitung und Schutzmanschette erhöht werden. Wenn in dieser Ausführungsvariante beispielsweise der Vorderarm dreht und die Versorgungsleitung aus dem Leitungsspeicher herausgezogen wird, dann wickelt sich die Versorgungsleitung indirekt um den Grundarm, d.h. unmittelbar um die Schutzmanschette, wobei die Versorgungsleitung dabei verschiebungsfrei auf der Lagerungsfläche der Schutzmanschette aufliegt und bei einem Zug auf die Versorgungsleitung die Schutzmanschette passiv mitgedreht wird, so dass die Versorgungsleitung auf der Lagerungsfläche der Schutzmanschette abwälzt. Indem die Versorgungsleitung auf der sich drehenden Schutzmanschette abwälzt, ist ein Reibungsverschleiß zwischen Versorgungsleitung und Schutzmanschette zumindest reduziert oder sogar ganz verhindert.

Der Grundarm kann in einer Abwandlung in seinem Durchmesser größer ausgebildet sein, als der Durchmesser des Vorderarms, derart, dass an einer dem Vorderarm zugewandten Stirnseite des Grundarms eine Ringstirnwand gebildet wird, an welcher die Schutzmanschette angeordnet und koaxial zum Vorderarm ausgerichtet ist. Die Schutzmanschette kann insoweit von einem Ringkörper gebildet werden, der eine abgerundete Außenwand aufweist. Beispielsweise kann die als Ringkörper ausgebildete Schutzmanschette in ihrem Querschnitt kreissektorförmig ausgebildet sein, wobei der Kreisbogen die Kontur der Außenwand bildet. Die Schutzmanschette kann, insbesondere der Ringkörper kann aus Kunststoff hergestellt sein. Eine solche Schutzmanschette entschärft insoweit eine sich ohne die Schutzmanschette ergebende Stufe im Übergangsbereich von Grundarm zu Vorderarm. Die Schutzmanschette, insbesondere der Ringkörper ist am Grundarm drehbar gelagert. Die Schutzmanschette, insbesondere der Ringkörper kann aber auch am Vorderarm drehbar gelagert sein.

Generell kann die Schutzmanschette in allen allgemeinen Ausführungsformen und speziellen Ausführungsvarianten wahlweise am Grundarm oder am Vorderarm drehbar gelagert sein.

In einer zweiten speziellen Ausführungsvariante kann deshalb von den mehreren Gliedern des Roboterarms ein erstes Glied ein Grundgestell sein, ein zweites Glied ein Karussell sein, ein drittes Glied eine Schwinge sein, ein viertes Glied ein Grundarm sein, ein fünftes Glied ein Vorderarm sein, ein sechstes Glied ein Handglied sein und ein siebtes Glied ein Flanschglied sein, wobei zur Bildung einer seriellen Armstruktur des Roboterarms jeweils zwei benachbarte Glieder durch jeweils eines der Gelenke gegeneinander verstellbar verbunden sind und die Schutzmanschette an dem Vorderarm angeordnet ist.

In einer dritten speziellen Ausführungsvariante kann von den mehreren Gliedern des Roboterarms ein erstes Glied ein Grundgestell sein, ein zweites Glied ein Karussell sein, ein drittes Glied eine Schwinge sein, ein viertes Glied ein Grundarm sein, ein fünftes Glied ein Vorderarm sein, ein sechstes Glied ein Handglied sein und ein siebtes Glied ein Flanschglied sein, wobei zur Bildung einer seriellen Armstruktur des Roboterarms jeweils zwei benachbarte Glieder durch jeweils eines der Gelenke gegeneinander verstellbar verbunden sind und die Schutzmanschette an dem Handglied angeordnet ist.

Wenn die Schutzmanschette an dem Handglied angeordnet ist, kann eine über den Vorderarm herangeführte Versorgungsleitung sich an der Schutzmanschette anlegen, wenn das Handglied schwenkt oder das Flanschglied des Roboterarms dreht. Wenn beispielsweise das Flanschglied dreht, dann wickelt sich die Versorgungsleitung indirekt um das Handglied oder das Gelenk, welches den Vorderarm mit dem Handglied verbindet, d.h. unmittelbar um die Schutzmanschette, wobei die Versorgungsleitung dabei über die Lagerungsfläche der Schutzmanschette gezogen wird und insoweit über die Schutzmanschette schleift.

Die Schutzmanschette kann in der dritten speziellen Ausführungsvariante an dem Handglied drehbar gelagert sein. Indem die Schutzmanschette an dem Handglied drehbar gelagert ist, kann ein Schleifen der Versorgungsleitung auf der Lagerungsfläche der Schutzmanschette verhindert werden. So kann einem Reibungsverschleiß vorgebeugt werden und Standfestigkeit von Versorgungsleitung und Schutzmanschette erhöht werden. Wenn in dieser Ausführungsvariante beispielsweise das Flanschglied dreht oder das Handglied schwenkt, dann wickelt sich die Versorgungsleitung indirekt um das Handglied oder das Gelenk, welches den Vorderarm mit dem Handglied verbindet, d.h. unmittelbar um die Schutzmanschette, wobei die Versorgungsleitung dabei verschiebungsfrei auf der Lagerungsfläche der Schutzmanschette aufliegt und bei einem Zug auf die Versorgungsleitung die Schutzmanschette passiv mitgedreht wird, so dass die Versorgungsleitung auf der Lagerungsfläche der Schutzmanschette abwälzt. Indem die Versorgungsleitung auf der sich drehenden Schutzmanschette abwälzt, ist ein Reibungsverschleiß zwischen Versorgungsleitung und Schutzmanschette zumindest reduziert oder sogar ganz verhindert.

In einer vierten speziellen Ausführungsvariante kann von den mehreren Gliedern des Roboterarms ein erstes Glied ein Grundgestell sein, ein zweites Glied ein Karussell sein, ein drittes Glied eine Schwinge sein, ein viertes Glied ein Grundarm sein, ein fünftes Glied ein Vorderarm sein, ein sechstes Glied ein Handglied sein und ein siebtes Glied ein Flanschglied sein, wobei zur Bildung einer seriellen Armstruktur des Roboterarms jeweils zwei benachbarte Glieder durch jeweils eines der Gelenke gegeneinander verstellbar verbunden sind und die Schutzmanschette an dem Flanschglied angeordnet ist.

Auch in dieser Ausführungsvariante kann die Schutzmanschette einen Halter aufweisen oder das Flanschglied einen Halter aufweisen, an dem ein Abschnitt der Versorgungsleitung befestigt ist.

Der Halter schafft einen eindeutigen, nicht veränderlichen Bezug des gehalterten Abschnitts der Versorgungsleitung bezüglich der Schutzmanschette.

Da die Schutzmanschette mittels wenigstens eines Drehlagers an dem Flanschglied des Roboterarms drehbar gelagert ist, kann sich ein frei beweglicher Abschnitt der Versorgungsleitung auf die Schutzmanschette aufwickeln, wenn sich die Schutzmanschette dreht, beispielsweise durch eine Zugbewegung auf die Versorgungsleitung. Indem die Schutzmanschette einen Halter aufweist, an dem ein Abschnitt der Versorgungsleitung befestigt ist, kann die Versorgungsleitung ihre Verbindung zur Schutzmanschette nicht vollständig verlieren. Indem ein Abschnitt der Versorgungsleitung durch den Halter an der Schutzmanschette festgelegt ist, kann ein Aufwickeln und ein Abwickeln der Versorgungsleitung sicherer und verschließfreier stattfinden.

Verschiedene Ausführungsbeispiele der Erfindung sind exemplarisch in den beigefügten schematischen Zeichnungen dargestellt.

Es zeigen:
- Fig. 1: eine perspektivische Ansicht eines Industrieroboters mit einer Energiezuführungsvorrichtung, die eine ausziehbare Versorgungsleitung aufweist,
- Fig. 2: eine perspektivische Ansicht eines Industrieroboters, der einen Roboterarm mit einer Versorgungsleitung und mit einer Schutzmanschette an seinem Flanschglied aufweist,
- Fig. 3: eine vergrößerte Teilansicht des Industrieroboters gemäß Fig. 2,
- Fig. 4: eine perspektivische Teilansicht des Industrieroboters, der einen Roboterarm mit der Versorgungsleitung und mit einer Schutzmanschette an seinem Grundarm aufweist, und
- Fig. 5: eine perspektivische Teilansicht eines Industrieroboters, der einen Roboterarm mit einer Versorgungsleitung und mit einer Schutzmanschette an einem Übergangsbereich von Grundarm zu Vorderarm aufweist.

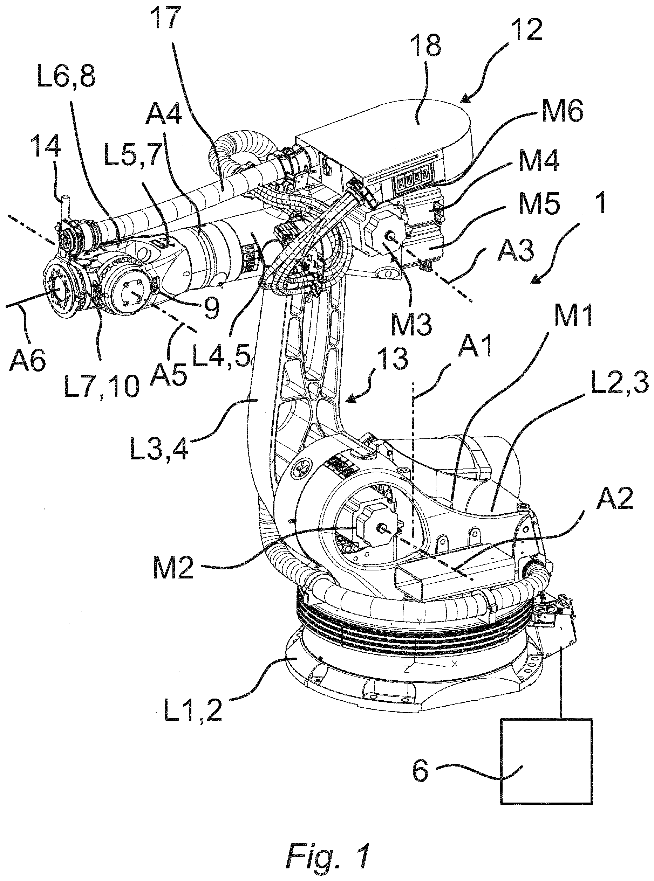

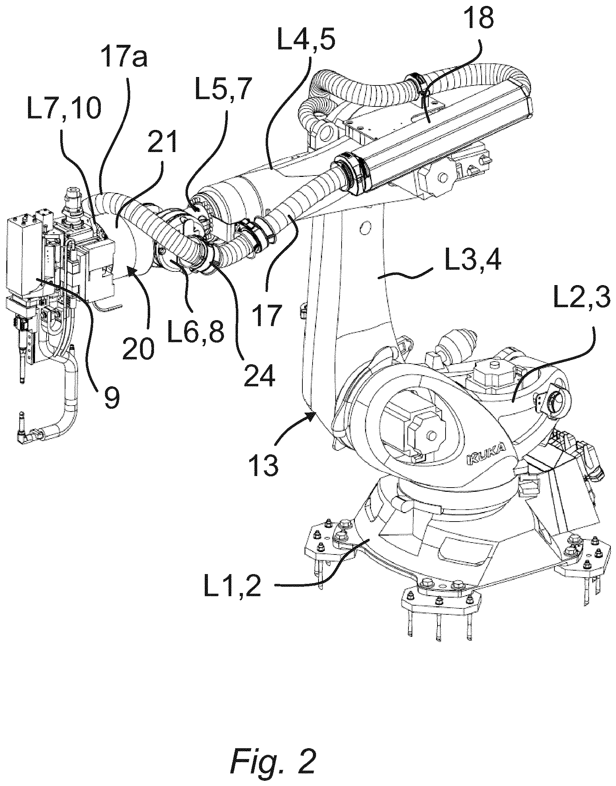

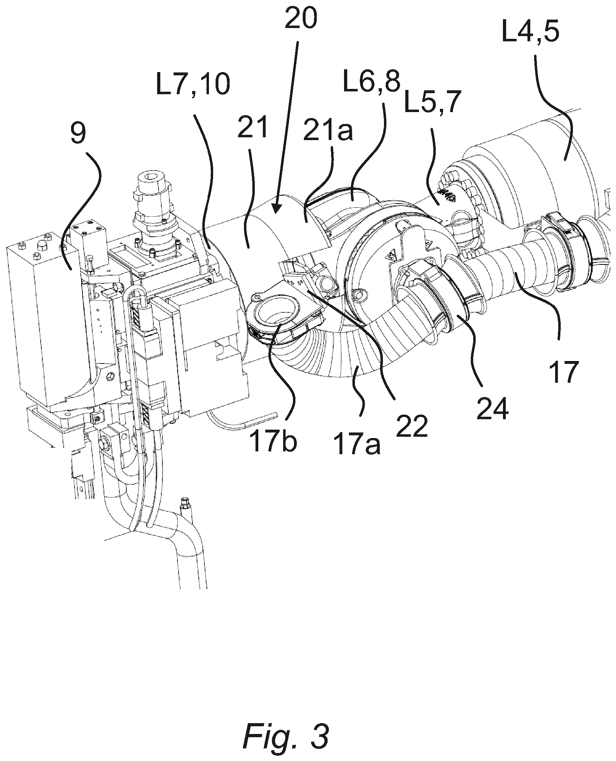

Die Fig. 1 zeigt einen Industrieroboter 1, der einen Roboterarm 13 und eine Robotersteuerung 6 aufweist. Der Roboterarm 2 umfasst im Falle des vorliegenden Ausführungsbeispiels mehrere nacheinander angeordnete und mittels Gelenke A1-A6 verbundene Glieder L1-L7. Bei den Gliedern L1-L7 handelt es sich insbesondere um ein Grundgestell 2 und ein relativ zum Grundgestell 2 um die vertikal verlaufende Achse A1 drehbar gelagertes Karussell 3. Weitere Glieder des Roboterarms 2 sind im Falle des vorliegenden Ausführungsbeispiels eine Schwinge 4, ein Grundarm 5, ein gabelförmiger Vorderarm 7, ein Handglied 8, und Flanschglied 10. Das Flanschglied 10 bildet eine Befestigungsvorrichtung zum Befestigen eines nicht näher dargestellten Endeffektors, beispielsweise eines Werkzeugs 9 (Fig.2, Fig.3). Die Schwinge 5 ist am unteren Ende z.B. an einem nicht näher dargestellten Schwingenlagerkopf auf dem Karussell 4 um eine vorzugsweise horizontale Drehachse A2 schwenkbar gelagert. Am oberen Ende der Schwinge 5 ist wiederum um eine ebenfalls vorzugsweise horizontale Achse A3 der Grundarm 5 schwenkbar gelagert.

Der Roboterarm 13 ist im Falle des gezeigten Ausführungsbeispiels als ein Knickarmroboter ausgebildet, bei dem die mehreren Glieder L1-L7 in einer kinematischen Kette aufeinanderfolgend angeordnet und jeweils zwei benachbarte Glieder L1-L7 durch jeweils eines der Gelenke A1-A6 gegeneinander verstellbar verbunden sind, wobei ein proximales Endglied L1 das Grundgestell 2 bildet, das zum Befestigen des Knickarmroboters an einem Fundament ausgebildet ist, und ein distales Endglied L7 das Flanschglied 10 bildet, das zur Befestigung eines vom Knickarmroboter handzuhabenden Werkzeugs 9 ausgebildet ist. Die einzelnen Gelenke A1-A6 werden von jeweils einem der Motoren M1-M6 angetrieben.

Am Grundarm 5 ist eine Energiezuführungsvorrichtung 12 befestigt, die einen Leitungsspeicher 18 aufweist, in dem ein Teilabschnitt einer Versorgungsleitung 17 vorgehalten ist. Ein freier Abschnitt der Versorgungsleitung 17 ist außerhalb entlang des Roboterarms 13 geführt. Ein distales Ende der Versorgungsleitung 17 ist mittels eines Halters 14 beispielsweise an dem Endglied L7, d.h. an dem Flanschglied 10 festgelegt.

Die Versorgungsleitung 17 des Industrieroboters 1 ist entlang zumindest zweier der mehreren Glieder L1-L7 des Roboterarms 13 über wenigstens eines der mehreren Gelenke A1-A6 hinweg geführt und außerhalb des Roboterarms 13 angeordnet.

In der Fig. 2 ist eine beispielhafte Ausführung einer Schutzmanschette 20 dargestellt, die an einem der Glieder L1-L7 angeordnet ist, und zwar am Flanschglied 10 des Roboterarms 13 über dessen Umfang hinweg vollständig umgebend, wobei die Schutzmanschette 20 eine äußere Mantelwand aufweist, die ausgebildet ist, eine Lagerungsfläche 21 für einen Abschnitt der Versorgungsleitung 17 zu bilden.

Im Falle der vorliegenden Ausführung der Fig. 2 ist von den mehreren Gliedern L1-L7 des Roboterarms 13 das erste Glied L1 ein Grundgestell 2, das zweite Glied L2 ein Karussell 3, das dritte Glied L3 eine Schwinge 4, das vierte Glied L4 ein Grundarm 5, das fünfte Glied L5 ein Vorderarm 7, das sechste Glied L6 ein Handglied 8 und das siebte Glied L7 das Flanschglied 10. Dabei sind zur Bildung einer seriellen Armstruktur des Roboterarms 13 jeweils zwei benachbarte Glieder L1-L7 durch jeweils eines der Gelenke A1-A6 gegeneinander verstellbar verbunden und die Schutzmanschette 20 an dem Flanschglied 10 angeordnet. An dem Flanschglied 10 ist ein beispielhaftes Werkzeug 9 in Form einer Schweißzange angebracht.

Die Fig. 3 zeigt den Bereich des Roboterarms 13, in dem die Schutzmanschette 20 angeordnet ist, in einer vergrößerten Ansicht.

Die Lagerungsfläche 21 der Schutzmanschette 20 ist zylindrisch ausgebildet und mit ihrer Zylinderachse in Längserstreckung des Gliedes L6 ausgerichtet an dem Flanschglied 10 angeordnet.

Die Lagerungsfläche 21 weist einen Lagerabschnitt 21a auf, der in seinem Durchmesser sich in Richtung des Vorderarms 7, also in der kinematischen Kette des Roboterarms 13 zum proximalen Ende zurück, erweiternd ausgebildet ist. Anders ausgedrückt weist die Lagerungsfläche 21 einen Lagerabschnitt 21a auf, der in seinem Durchmesser sich in Richtung des Flanschglieds 10, also in der kinematischen Kette des Roboterarms 13 zum distalen Ende nach vorne, verjüngend ausgebildet ist.

Die Lagerungsfläche 21 ist zum Aufwickeln und/oder Abwickeln eines Abschnitts 17a der Versorgungsleitung 17 in einer im Wesentlichen um den Umfang des Gliedes L1-L7 (Flanschglied 10, Handglied 8) herumführenden Richtung ausgebildet. Die Schutzmanschette 20 weist außerdem einen Halter 22 auf, an dem ein Endabschnitt 17b der Versorgungsleitung 17 befestigt ist.

Die Schutzmanschette 20 ist mittels wenigstens eines nicht näher dargestellten Drehlagers an dem Flanschglied 10 oder dem Handglied 8 des Roboterarms 13 drehbar gelagert.

Mittels einer Schlauchführungsschelle 24 ist die Versorgungsleitung 17 derart geführt, dass sich der Abschnitt 17a der Versorgungsleitung 17 zuverlässig auf die Lagerungsfläche 21 der Schutzmanschette 20 auflegt ohne abzurutschen. Die Schlauchführungsschelle 24 ist an einem Schenkel des Glieds L6, d.h. an dem Handglied 8 gelagert. Die Schlauchführungsschelle 24 kann, wie dargestellt, einen Befestigungshalter, eine Schelle und eine doppelte Führungstrompete umfassen. Mittels der doppelten Führungstrompete ist die Versorgungsleitung 17 seitlich geführt und kann dabei in ihrer Längserstreckung verschoben werden, d.h. in beide Richtungen durch die Schelle hindurch gezogen werden, wobei eine geringfügige Winkeländerung der Lage der Versorgungsleitung 17 möglich ist. Die Schelle befestigt die Führungstrompete an dem Befestigungshalter. Der Befestigungshalter kann die Schlauchführungsschelle 24 entweder starr an dem Handglied 8 befestigen oder die Schlauchführungsschelle 24 drehbar oder schwenkbar an dem Handglied 8 lagern.

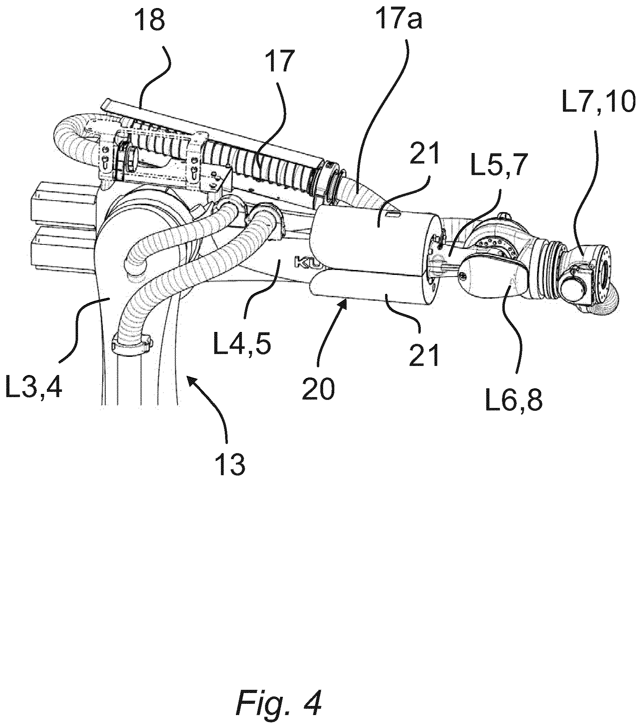

Die Fig. 4 zeigt einen Roboterarm 13 analog der Fig. 2, wobei die Schutzmanschette 20 jedoch nicht am Flanschglied 10 oder am Handglied 8 angeordnet ist, sondern an dem Grundarm 5. In alternativen Ausführungen können auch mehrere Schutzmanschetten 20 an mehreren Stellen des Roboterarms 13, d.h. an mehreren Gliedern L1-L7 angeordnet sein.

Bei dem Roboterarm 13 gemäß Fig. 4 sind von den mehreren Gliedern des Roboterarms 13 das dritte Glied L3 die Schwinge 4, das vierte Glied L4 der Grundarm 5, das fünfte Glied L5 der Vorderarm 7, das sechste Glied L6 das Handglied 8 und das siebte Glied L7 das Flanschglied 10, wobei zur Bildung einer seriellen Armstruktur des Roboterarms 13 jeweils zwei benachbarte Glieder L1-L7 durch jeweils eines der Gelenke A1-A6 gegeneinander verstellbar verbunden sind und die Schutzmanschette 20 an dem Grundarm 5 angeordnet ist.

Die Schutzmanschette 20 ist an dem Grundarm 5 drehbar gelagert.

Im Falle des Ausführungsbeispiels der Fig. 4 ist die Schutzmanschette 20 zweiteilig ausgebildet, so dass die Schutzmanschette 20 nachträglich an den Roboterarm 13 angebracht, d.h. nachgerüstet werden kann, und/oder ausgetauscht, d.h. ersetzt werden kann, ohne dass der Roboterarm 13 als solches zerlegt werden müsste.

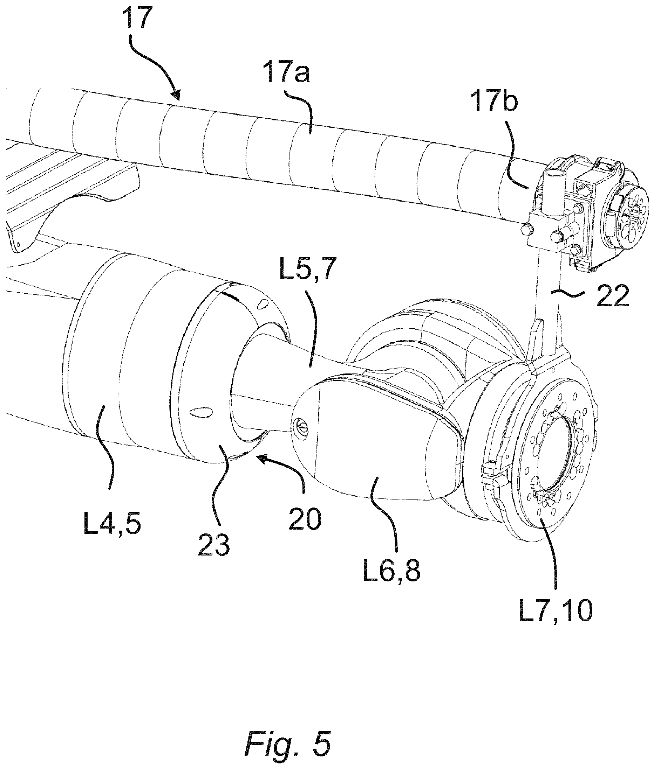

In der Ausführung gemäß Fig. 5 ist der Grundarm 5 in seinem Durchmesser größer ausgebildet, als der Durchmesser des Vorderarms 7, derart, dass an einer dem Vorderarm 7 zugewandten Stirnseite des Grundarms 5 eine Ringstirnwand 23 gebildet wird, an welcher die Schutzmanschette 20 angeordnet und koaxial zum Vorderarm 7 ausgerichtet ist.

Die als Ringkörper ausgebildete Schutzmanschette 20 ist im Falle der Ausführung gemäß Fig. 5 in ihrem Querschnitt kreissektorförmig ausgebildet, wobei der Kreisbogen die Kontur der Außenwand bildet. Die Schutzmanschette 20 kann insbesondere aus Kunststoff hergestellt sein. Eine solche Schutzmanschette 20 entschärft insoweit eine sich ohne die Schutzmanschette 20 ergebende Stufe im Übergangsbereich von Grundarm 5 zu Vorderarm 7. Die Schutzmanschette 20, insbesondere der Ringkörper ist am Grundarm 5 drehbar gelagert.

Die Schutzmanschette 20, insbesondere der Ringkörper kann aber auch am Vorderarm 7 drehbar gelagert sein.

## Patentansprüche

1. Industrieroboter aufweisend einen Roboterarm (13) mit mehreren Gliedern (L1-L7), die mittels mehrerer Gelenke (A1-A6) verbunden und durch die mehreren Gelenke (A1-A6) gegeneinander verstellbar gelagert sind, sowie aufweisend eine Versorgungsleitung (17), die entlang zumindest zweier der mehreren Glieder (L1-L7) des Roboterarms (13) über wenigstens eines der mehreren Gelenke (A1-A6) hinweg geführt und außerhalb des Roboterarms (13) angeordnet ist, und aufweisend eine Schutzmanschette (20), die an einem der Glieder (L1-L7) angeordnet ist, und zwar zumindest eines der Glieder (L1-L7) über dessen Umfang hinweg zumindest teilweise oder vollständig umgebend, wobei die Schutzmanschette (20) eine äußere Mantelwand aufweist, die ausgebildet ist, eine Lagerungsfläche (21) für einen Abschnitt (17a) der Versorgungsleitung (17) zu bilden, **dadurch gekennzeichnet, dass** die Schutzmanschette (20) mittels wenigstens eines Drehlagers an einem der Glieder (L1-L7) des Roboterarms (13) drehbar gelagert ist und zwar derart, dass die Schutzmanschette (20) um das Glied (L1-L7) herum rotieren kann, wobei sich ein Abschnitt (17a) der Versorgungsleitung (17) gleitfrei an die Schutzmanschette (20) anlegen kann, so dass zwischen der Versorgungsleitung (17) und der Lagerungsfläche (21) keine Relativbewegung stattfindet.

2. Industrieroboter nach Anspruch 1, **dadurch gekennzeichnet, dass** die Lagerungsfläche (21) zumindest im Wesentlichen zylindrisch ausgebildet und mit ihrer Zylinderachse in Längserstreckung des Gliedes (L1-L7) ausgerichtet an einem der Glieder (L1-L7) angeordnet ist.

3. Industrieroboter nach Anspruch 2, **dadurch gekennzeichnet, dass** die Lagerungsfläche (21) in ihrem Durchmesser sich erweiternd oder sich verjüngend ausgebildet ist.

4. Industrieroboter nach einem der Ansprüche 1 bis 3,
**dadurch gekennzeichnet, dass** die Lagerungsfläche (21) zum Aufwickeln und/oder Abwickeln des Abschnitts (17a) der Versorgungsleitung (17) in einer im Wesentlichen um den Umfang des Gliedes (L1-L7) herumführenden Richtung ausgebildet ist.

5. Industrieroboter nach einem der Ansprüche 1 bis 5,
**dadurch gekennzeichnet, dass** die Schutzmanschette (20) einen Halter (22) aufweist, an dem ein Abschnitt (17b) der Versorgungsleitung (17) befestigt ist.

6. Industrieroboter nach einem der Ansprüche 1 bis 6,
**dadurch gekennzeichnet, dass** von den mehreren Gliedern (L1-L7) des Roboterarms (13) ein erstes Glied (L1) ein Grundgestell (2) ist, ein zweites Glied (L2) ein Karussell (3) ist, ein drittes Glied (L3) eine Schwinge (4) ist, ein viertes Glied (l4) ein Grundarm (5) ist, ein fünftes Glied (L5) ein Vorderarm (7) ist, ein sechstes Glied (L6) ein Handglied (8) ist und ein siebtes Glied (L7) ein Flanschglied (10) ist, wobei zur Bildung einer seriellen Armstruktur des Roboterarms (13) jeweils zwei benachbarte Glieder (L1-L7) durch jeweils eines der Gelenke (A1-A6) gegeneinander verstellbar verbunden sind und die Schutzmanschette (20) an dem Grundarm (5) angeordnet ist.

7. Industrieroboter nach Anspruch 7, **dadurch gekennzeichnet, dass** die Schutzmanschette (20) an dem Grundarm (5) drehbar gelagert ist.

8. Industrieroboter nach einem der Ansprüche 1 bis 6,
**dadurch gekennzeichnet, dass** von den mehreren Gliedern (L1-L7) des Roboterarms (13) ein erstes Glied (L1) ein Grundgestell (2) ist, ein zweites Glied (L2) ein Karussell (3) ist, ein drittes Glied (L3) eine Schwinge (4) ist, ein viertes Glied (l4) ein Grundarm (5) ist, ein fünftes Glied (L5) ein Vorderarm (7) ist, ein sechstes Glied (L6) ein Handglied (8) ist und ein siebtes Glied (L7) ein Flanschglied (10) ist, wobei zur Bildung einer seriellen Armstruktur des Roboterarms (13) jeweils zwei benachbarte Glieder (L1-L7) durch jeweils eines der Gelenke (A1-A6) gegeneinander verstellbar verbunden sind und die Schutzmanschette (20) an dem Vorderarm (7) angeordnet ist.

## Claims

1. Industrial robot comprising a robot arm (13) with a plurality of links (L1-L7) connected by a plurality of joints (A1-A6) and mounted so as to be adjustable relative to one another by the plurality of joints (A1-A6), and comprising a supply line (17) which is guided along at least two of the plurality of links (L1-L7) of the robot arm (13) over at least one of the plurality of joints (A1-A6) and arranged outside the robot arm (13), and comprising a protective sleeve (20) arranged on one of the links (L1-L7), at least one of the links (L1-L7) at least partially or completely surrounding its circumference, wherein the protective sleeve (20) has an outer jacket wall that is designed to form a bearing surface (21) for a section (17a) of the supply line (17), **characterized in that** the protective sleeve (20) is rotatably mounted on one of the links (L1-L7) of the robot arm (13) by means of at least one pivot bearing in such a way that the protective sleeve (20) can rotate around the link (L1-L7), whereby a section (17a) of the supply line (17) can rest against the protective sleeve (20) without sliding, so that no relative movement takes place between the supply line (17) and the bearing surface (21).

2. Industrial robot according to claim 1, **characterized in that** the bearing surface (21) is at least substantially cylindrical in shape and is arranged on one of the links (L1-L7) with its cylinder axis aligned in the longitudinal direction of the link (L1-L7).

3. Industrial robot according to claim 2, **characterized in that** the bearing surface (21) is designed to widen or taper in diameter.

4. Industrial robot according to one of claims 1 to 3, **characterized in that** the bearing surface (21) for winding and/or unwinding the section (17a) of the supply line (17) is configured to be guided in a direction essentially around the circumference of the link (L1-L7).

5. Industrial robot according to one of claims 1 to 5, **characterized in that** the protective sleeve (20) has a holder (22) to which a section (17b) of the supply line (17) is attached.

6. Industrial robot according to one of claims 1 to 6, **characterized in that**, of the plurality of links (L1-L7) of the robot arm (13), a first link (L1) is a base frame (2), a second link (L2) is a carousel (3), a third link (L3) is a swing arm (4), a fourth link (L4) is a base arm (5), a fifth link (L5) is a front arm (7), a sixth link (L6) is a hand member (8) and a seventh link (L7) is a flange member (10), wherein, to form a serial arm structure of the robot arm (13), each two adjacent links (L1-L7) are connected to each other in an adjustable manner by one of the joints (A1-A6), and the protective sleeve (20) is arranged on the base arm (5).

7. Industrial robot according to claim 7, **characterized in that** the protective sleeve (20) is rotatably mounted on the base arm (5).

8. Industrial robot according to one of claims 1 to 6, **characterized in that**, of the plurality of links (L1-L7) of the robot arm (13), a first link (L1) is a base frame (2), a second link (L2) is a carousel (3), a third link (L3) is a swing arm (4), a fourth link (L4) is a base arm (5), a fifth link (L5) is a front arm (7), a sixth link (L6) is a hand member (8), and a seventh link (L7) is a flange member (10), wherein, to form a serial arm structure of the robot arm (13), each two adjacent links (L1-L7) are connected to each other in an adjustable manner by one of the joints (A1-A6), and the protective sleeve (20) is arranged on the front arm (7).

## Revendications

1. Robot industriel comprenant un bras de robot (13) avec plusieurs membres (L1-L7) qui sont reliés au moyen de plusieurs articulations (A1-A6) et qui sont montés de manière à pouvoir être déplacés les uns par rapport aux autres grâce aux plusieurs articulations (A1-A6), et comprenant une conduite d'alimentation (17) qui est guidée le long d'au moins deux des plusieurs membres (L1-L7) du bras de robot (13) en passant par au moins l'une des plusieurs articulations (A1-A6) et disposée à l'extérieur du bras de robot (13), et comportant un manchon de protection (20) qui est disposé sur l'un des membres (L1-L7), à savoir au moins l'un des membres (L1-L7) en entourant au moins partiellement ou complètement sa circonférence, le manchon de protection (20) comportant une paroi d'enveloppe extérieure qui est conçue pour former une surface d'appui (21) pour une partie (17a) de la conduite d'alimentation (17), **caractérisé en ce que** le manchon de protection (20) est monté de manière rotative sur l'un des membres (L1-L7) du bras de robot (13) au moyen d'au moins un palier pivotant, de telle sorte que le manchon de protection (20) peut tourner autour du membre (L1-L7), une partie (17a) de la conduite d'alimentation (17) peut s'appliquer sans glissement contre le manchon de protection (20), de sorte qu'il ne se produit aucun mouvement relatif entre la conduite d'alimentation (17) et la surface d'appui (21).

2. Robot industriel selon la revendication 1, **caractérisé en ce que** la surface d'appui (21) est au moins essentiellement cylindrique et est disposée sur l'un des membres (L1-L7) avec son axe cylindrique aligné dans le sens longitudinal du membre (L1-L7).

3. Robot industriel selon la revendication 2, **caractérisé en ce que** la surface d'appui (21) est conçue de manière à s'élargir ou à se rétrécir dans son diamètre.

4. Robot industriel selon l'une des revendications 1 à 3, **caractérisé en ce que** la surface d'appui (21) est conçue pour enrouler et/ou dérouler la partie (17a) de la conduite d'alimentation (17) dans une direction s'étendant essentiellement autour de la circonférence du membre (L1-L7).

5. Robot industriel selon l'une des revendications 1 à 5, **caractérisé en ce que** le manchon de protection (20) comporte un support (22) sur lequel est fixée une section (17b) de la conduite d'alimentation (17).

6. Robot industriel selon l'une des revendications 1 à 6, **caractérisé en ce que**, parmi les plusieurs membres (L1-L7) du bras de robot (13), un premier membre (L1) est un châssis de base (2), un deuxième membre (L2) est un carrousel (3), un troisième membre (L3) est un bras oscillant (4), un quatrième membre (L4) est un bras de base (5), un cinquième membre (L5) est un bras avant (7), un sixième membre (L6) est un membre de main (8) et un septième membre (L7) est un élément de bride (10), deux membres (L1-L7) adjacents étant reliés de manière réglable l'un par rapport à l'autre par l'une des articulations (A1-A6) afin de former une structure en série de bras de robot (13), et le manchon de protection (20) étant disposé sur le bras de base (5).

7. Robot industriel selon la revendication 7, **caractérisé en ce que** le manchon de protection (20) est monté de manière rotative sur le bras de base (5).

8. Robot industriel selon l'une des revendications 1 à 6, **caractérisé en ce que**, parmi les plusieurs membres (L1-L7) du bras de robot (13), un premier membre (L1) est un châssis de base (2), un deuxième membre (L2) est un carrousel (3), un troisième membre (L3) est un bras oscillant (4), un quatrième membre (L4) est un bras de base (5), un cinquième membre (L5) est un bras avant (7), un sixième membre (L6) est un membre de main (8) et un septième membre (L7) est un élément de bride (10), deux membres (L1-L7) adjacents étant reliés de manière réglable l'un par rapport à l'autre par l'une des articulations (A1-A6) afin de former une structure en série de bras de robot (13), et le manchon de protection (20) étant disposé sur le bras avant (7).
